# EUROPEAN PATENT APPLICATION

(11) **EP 4 372 864 A1**
(43) Date of publication of application: **22.05.2024**
(21) Application number: 21965875.4
(22) Date of filing: 30.11.2021
(51) Int. Cl.: H01M 10/42

(54) **BATTERY, ELECTRIC DEVICE, AND METHOD AND APPARATUS FOR MANUFACTURING BATTERY**

(71) Applicant: Contemporary Amperex Technology Co., Limited, Ningde, Fujian 352100 (CN)
(72) Inventor: HU, Langchao, Ningde, Fujian 352100 (CN); HUANG, Xiaoteng, Ningde, Fujian 352100 (CN); YANG, Haiqi, Ningde, Fujian 352100 (CN); XU, Chenyi, Ningde, Fujian 352100 (CN); WANG, Peng, Ningde, Fujian 352100 (CN); SUN, Zhanyu, Ningde, Fujian 352100 (CN)
(74) Representative: Gong, Jinping
(86) International application number: PCT/CN2021/134294
(87) International publication number: WO 2023/097427

(57) **Abstract**

Embodiments of the present application provide a battery, an electrical device, and a method and an apparatus for manufacturing a battery. The battery includes: a battery cell including a pressure relief mechanism, the pressure relief mechanism is configured to be actuated to release an internal pressure when the internal pressure or a temperature of the battery cell reaches a threshold value; a firefighting pipeline configured for accommodating a fire extinguishing medium, and the firefighting pipeline is configured to discharge the fire extinguishing medium when the pressure relief mechanism is actuated; and a fixing member arranged between the battery cell and the firefighting pipeline, and the fixing member is configured to fix the firefighting pipeline; and the fixing member is provided with a flow passage area and a flow guiding structure, the flow passage area covers the pressure relief mechanism, and the flow passage area is configured to cause the fire extinguishing medium to flow through the flow passage area to the battery cell when the pressure relief mechanism is actuated; and the flow guiding structure is configured to guide the fire extinguishing medium towards the flow passage area when the pressure relief mechanism is actuated. The flow guiding structure allows more fire extinguishing mediums to flow smoothly through the flow passage area, and the firefighting effect is improved.

## Description

### TECHNICAL FIELD

The present application relates to the field of battery technology, and more particularly to a battery, an electrical device, and a method and an apparatus for manufacturing a battery.

### BACKGROUND

Due that the advantages of high energy density, high power density, multiple cycles, and long storage time, etc., lithium-ion batteries have been widely used in electric vehicles.

However, the spontaneous combustion of a battery is the main factor causing safety accidents in electric vehicles. In order to avoid the spontaneous combustion of the battery, the firefighting pipelines are generally provided in the art. However, the battery using the firefighting pipeline has the problem of thermal runaway and failure to perform timely firefighting.

### SUMMARY

According to a first aspect of an embodiment of the present application, a battery is provided, and the battery includes: a battery cell including a pressure relief mechanism, the pressure relief mechanism is configured to be actuated to release an internal pressure when the internal pressure or a temperature of the battery cell reaches a threshold value; a firefighting pipeline configured for accommodating a fire extinguishing medium, and the firefighting pipeline is configured to discharge the fire extinguishing medium when the pressure relief mechanism is actuated; and a fixing member arranged between the battery cell and the firefighting pipeline, and the fixing member is configured to fix the firefighting pipeline; and the fixing member is provided with a flow passage area and a flow guiding structure, the flow passage area covers the pressure relief mechanism, and the flow passage area is configured to cause the fire extinguishing medium to flow through the flow passage area to the battery cell when the pressure relief mechanism is actuated; and the flow guiding structure is configured to guide the fire extinguishing medium towards the flow passage area when the pressure relief mechanism is actuated.

When the thermal runaway of the battery occurs the pressure relief mechanism is actuated, and the firefighting pipeline is melted through, cooling liquid and other fire extinguishing mediums contained in the firefighting pipeline are flowed out of the firefighting pipeline. If a part where the firefighting pipeline is melted through is facing the flow passage area, the fire extinguishing medium directly flows to the battery cell through the flow passage area. When the part where the firefighting pipeline is melted through is on a side of the flow passage area, or the fire extinguishing medium sprayed by the firefighting pipeline flows to a side of the flow passage area, the fire extinguishing medium can be guided towards the flow passage area through a flow guiding structure. Therefore, the arrangement of the flow guiding structure on the fixing member allows more fire extinguishing mediums to flow into the portion where the thermal runaway of the battery is occurred, and the flow guiding structure makes the fire extinguishing medium flowing more smoothly to the portion where the thermal runaway of the battery is occurred; the firefighting effect is improved, and the problem of delayed firefighting during the thermal runaway of the battery is alleviated.

In some embodiments, the flow guiding structure and the flow passage area are arranged along a length direction of the firefighting pipeline.

The fire extinguishing medium on the side of the flow passage area is guided towards the flow passage area by the flow guiding structure, such that more fire extinguishing mediums are allowed to flow smoothly through the flow passage area to the battery cell; the firefighting effect is improved, and the problem of delayed firefighting during the thermal runaway of the battery is alleviated.

In some embodiments, the flow guiding structure includes a recess concavely formed along a direction of the fixing member towards the battery cell, and the recess is connected between the flow passage area and a lateral edge of the fixing member.

The recess can reduce the obstacles caused by fixing member to the flow of fire extinguishing medium, the flow resistance of fire extinguishing medium is reduced, and more fire extinguishing mediums are allowed to flow smoothly through the flow passage area to the battery cell; the firefighting effect is improved.

In some embodiments, the flow passage area and the lateral edge of the fixing member are arranged along a length direction of the firefighting pipeline.

The recess is connected between the flow passage area and the lateral edge of the fixing member, and the flow passage area and the lateral edge of the fixing member are arranged along the length direction of the firefighting pipeline, that is, the recess extends along the length direction of the firefighting pipeline. No matter the portion of firefighting pipeline facing the flow passage area, or the portion of firefighting pipeline located at a side of the flow passage area, is melted through, the fire extinguishing medium released from the firefighting pipeline can either directly flow into the flow passage area or flow into the recess; by the guiding effect of the recess, more fire extinguishing mediums are allowed to flow through the flow passage area, and the firefighting effect is improved.

In some embodiments, the flow guiding structure includes reinforcing ribs, and the reinforcing rib is located at one end of the recess close to the flow passage area.

The strength of the fixing member is improved by providing the reinforcing rib.

In some embodiments, the flow guiding structure includes a notch, the notch and the flow passage area are arranged along a length direction of the firefighting pipeline; the notch is formed by removing material from a lateral edge of the fixing member towards the flow passage area, and the lateral edge of the fixing member and the flow passage area are located in the length direction of the firefighting pipeline.

The notch is formed by removing material from the fixing member, which can reduce the flow resistance of the fixing member to the fire extinguishing medium, and more fire extinguishing mediums are allowed to flow smoothly to the flow passage area.

In some embodiments, the notch is constructed as a rectangular notch or an arc-shaped notch.

The notch is formed by removing material from the fixing member, which can reduce the flow resistance of the fixing member to the fire extinguishing medium, and more fire extinguishing mediums are allowed to flow smoothly to the flow passage area.

In some embodiments, both sides of the flow passage area are respectively provided with the flow guiding structure along a length direction of the firefighting pipeline.

The recess extends along the length direction of the firefighting pipeline. Regardless of which portion of the firefighting pipeline is melted through, the fire extinguishing medium released from the firefighting pipeline can either directly flow into the flow passage area or flow to the flow guiding structure. By the guiding effect of the flow guiding structure, more fire extinguishing mediums flows towards the flow passage area, and the firefighting effect is improved.

According to another aspect of the present embodiment, an electrical device is provided, which includes a battery configured to provide electrical energy.

According to another aspect of the embodiment of the present application, a method for manufacturing a battery is provided, which includes: mounting a battery cell, and the battery cell includes a pressure relief mechanism configured to be actuated to release an internal pressure when the internal pressure or a temperature of the battery cell reaches a threshold value; mounting a fixing member; and mounting a firefighting pipeline and fixing the firefighting pipeline by the fixing member, the firefighting pipeline is configured for accommodating a fire extinguishing medium and configured to discharge the fire extinguishing medium when the pressure relief mechanism is actuated; the fixing member is provided with a flow passage area and a flow guiding structure, the flow passage area covers the pressure relief mechanism, and the flow passage area is configured to cause the fire extinguishing medium to flow through the flow passage area to the battery cell when the pressure relief mechanism is actuated; and the flow guiding structure is configured to guide the fire extinguishing medium towards the flow passage area when the pressure relief mechanism is actuated.

According to another aspect of the embodiment of the present application, an apparatus for manufacturing a battery is provided, which includes: a battery cell mounting device configured for mounting a battery cell, and the battery cell includes a pressure relief mechanism configured to be actuated to release an internal pressure when the internal pressure or a temperature of the battery cell reaches a threshold value; a fixing member mounting device configured for mounting a fixing member; and a firefighting pipeline mounting device configured for mounting a firefighting pipeline and fixing the firefighting pipeline by the fixing member, the firefighting pipeline is configured for accommodating a fire extinguishing medium and configured to discharge the fire extinguishing medium when the pressure relief mechanism is actuated; the fixing member is provided with a flow passage area and a flow guiding structure, the flow passage area covers the pressure relief mechanism, and the flow passage area is configured to cause the fire extinguishing medium to flow through the flow passage area to the battery cell when the pressure relief mechanism is actuated; and the flow guiding structure is configured to guide the fire extinguishing medium towards the flow passage area when the pressure relief mechanism is actuated.

### BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1a is a structural schematic view of an electrical device disclosed in some embodiments of the present application;
FIG. 1b is a schematic view of an explosion structure of a battery disclosed in some embodiments of the present application;
FIG. 1c is a schematic view of an explosion structure of a battery cell disclosed in some embodiments of the present application;
FIG. 2 is an internal partial structural schematic view of a battery disclosed in some embodiments of the present application;
FIG. 3 is a schematic view in an A-A direction of FIG. 2;
FIG. 4 is a schematic top view of FIG. 2;
FIG. 5 is a schematic view in a B-B direction of FIG. 2;
FIG. 6 is a structural schematic view of a fixing member of a battery disclosed in a first embodiment of the present application;
FIG. 7 is a schematic top view of FIG. 6;
FIG. 8 is a structural schematic view of a fixing member of a battery disclosed in a second embodiment of the present application;
FIG. 9 is a schematic top view of FIG. 8;
FIG. 10 is a structural schematic view of a fixing member of a battery disclosed in a third embodiment of the present application;
FIG. 11 is a schematic top view of FIG. 10;
FIG. 12 is a structural schematic view of a fixing member of a battery disclosed in a fourth embodiment of the present application;
FIG. 13 is a schematic top view of FIG. 12;
FIG. 14 is a structural schematic view of a fixing member of a battery disclosed in a fifth embodiment of the present application;
FIG. 15 is a schematic top view of FIG. 14;
FIG. 16 is a structural schematic view of a fixing member of a battery disclosed in a sixth embodiment of the present application;
FIG. 17 is a schematic top view of FIG. 16;
FIG. 18 is a structural schematic view of a fixing member of a battery disclosed in a seventh embodiment of the present application;
FIG. 19 is a schematic top view of FIG. 18;
FIG. 20 is a structural schematic view of a fixing member of a battery disclosed in an eighth embodiment of the present application;
FIG. 21 is a schematic top view of FIG. 20;
FIG. 22 is a structural schematic view of a fixing member of a battery disclosed in a ninth embodiment of the present application;
FIG. 23 is a schematic top view of FIG. 22;
FIG. 24 is a structural schematic view of a fixing member of a battery disclosed in a tenth embodiment of the present application; and
FIG. 25 is a schematic top view of FIG. 24.

In the accompanying drawings, the drawings are not drawn to the actual scale.

The reference signs are listed:
1-battery cell; 11-pressure relief mechanism; 12-electrode terminal; 13-casing; 14-electrode assembly; 141 electrode lug; 15-end cap assembly; 151-end cap plate; 152-closing member; 16-connection member; 2-fireflighting pipe; 3-fixing member; 31-flow passage area; 32-flow guiding structure; 321-recess; 322-notch; 3221-rectangular notch; 3222-arc shaped notch; 323-reinforcing rib; 34-main portion; 35-connection portion; 36-connection strip; 37-limiting portion; 100-battery; 101-first casing; 102-second casing; 200-controller; 300-motor

### DETAILED DESCRIPTION

The following embodiments of the present application are described in detail, and examples of the embodiment are illustrated in the accompanying figures; where an always unchanged reference number or similar reference numbers represent(s) identical or similar components or components having identical or similar functionalities. The embodiment described below with reference to the accompanying figures is illustrative and intended to illustrate the present application, but should not be considered as any limitation to the present application.

In the description of the present application, it should be noted that unless otherwise specified, "a plurality of" means two or more; The terms "up", "down", "left", "right", "inside", "outside" indicate the orientation or positional relationship only for the convenience of describing and simplifying the present application, rather than indicating or implying that the device or component referred to must have a specific orientation, be constructed and operated in a specific orientation, and therefore cannot be understood as a limitation on the present application. In addition, the terms "first", "second", "third", etc. are only used to describe the purpose and cannot be understood as indicating or implying relative importance. "Vertical" is not strictly vertical, but within the allowable range of error. "Parallel" is not strictly parallel, but within the allowable range of error.

The directional words appearing in the following description are all the directions shown in the figures and do not limit the specific structure of the present application. In the description of the present application, it should also be noted that unless otherwise specified and limited, the terms "mounting", "connection", and "connecting" should be broadly understood, for example, it can be fixedly connected, detachably connected, or integrally connected. It can be directly connected or indirectly connected through an intermediate medium. For those skilled in the art, the specific meanings of the above terms in the present application can be understood according to specific circumstances.

The rechargeable battery is referred to as a secondary battery or a power battery. Currently, the most widely used rechargeable battery is a lithium battery, such as a lithium sulfur battery, a sodium lithium ion battery, or a magnesium ion battery, which is not limited herein. For the convenience of description, the rechargeable batteries can be collectively referred to as batteries in the present application.

The safety characteristic of the battery is an important characteristic for measuring the battery, and it is necessary to ensure the safety of the battery as much as possible during use or charging.

The battery is generally composed of a plurality of battery cells connected and combined. When the battery cells are subject to external short circuit, overcharge, acupuncture, flat panel impact, etc., the battery cells are prone to thermal runaway. When the thermal runaway of the battery is occurred, emissions are generated inside the battery cell, the emissions include but are not limited to: electrolyte, dissolved or split positive and negative electrode sheets, fragments of isolation membranes, high-temperature and high-pressure gases generated by reactions, flames, etc. The emissions undergo thermal diffusion during the emission process, which leads to thermal runaway of other battery cells and even causes accidents such as explosions.

For the thermal runaway of battery cells, an effective solution currently is to provide a firefighting pipeline, the firefighting pipeline being used to prevent or delay the explosion or fire of the battery cells when the thermal runaway occurs. The firefighting pipeline is generally mounted inside a case. When the thermal runaway of the battery cell is occurred, the firefighting pipeline releases the fire extinguishing medium to achieve firefighting.

However, the applicant found that although the firefighting pipeline was provided, the battery using the firefighting pipeline still faces the problem of the thermal runaway of the battery and failure to achieve timely firefighting. Regarding above problems, the applicant attempts to change the positions and firefighting methods of the firefighting pipeline, but none of them could solve the above problems. After long-term research, the applicant further found that the reason why the battery with the firefighting pipeline still has safety risks is that the position of the firefighting pipeline changes during the process of the thermal runaway of the battery, which in turn prevents the firefighting pipeline from providing fire extinguishing medium to the thermal runaway area in a timely manner. Therefore, the applicant has proposed a fixing member inside the battery, and the fixing member is fixed on the battery cell so at to fix the firefighting pipeline, which can overcome the problem of delayed firefighting caused by the position changes of the firefighting pipeline during the thermal runaway of the battery. However, when a melt opening of the firefighting pipeline is at the lateral edge of the fixing member, the lateral edge of the fixing member obstructs the flow of the fire extinguishing medium, so that when the fire extinguishing medium flows out of the firefighting pipeline, due to the obstruction of the fixing member to the flow of fire extinguishing medium, the amount of fire extinguishing medium flowing into the thermal runaway area of the battery is reduced, which reduces the firefighting efficiency, or the fire extinguishing medium released from the firefighting pipeline is not reach the thermal runaway area of the battery timely.

In embodiments of the present application, a battery is provided, the firefighting pipeline is fixed by a fixing member and a flow guiding structure is arranged on the fixing member to guide the fire extinguishing medium to the thermal runaway area of the battery through the flow guiding structure when the fire extinguishing medium is released from the firefighting passage, the problem of reduced amount of fire extinguishing medium flowing into the thermal runaway area of the battery or inability to reach the thermal runaway area of the battery timely when the battery occurs thermal runaway is alleviated.

The battery in the embodiment of the present application can be applied to various electrical devices that can provide a power source through electrical energy. The electrical device used here can, but is not limited to, an electric vehicle, an electric train, an electric bicycle, a golf cart, a drone, or a ship, etc. Moreover, the electrical device can be a device that only uses the battery to provide power, or a hybrid device. The battery provides electrical energy for the electrical device and drives the electric device through a motor.

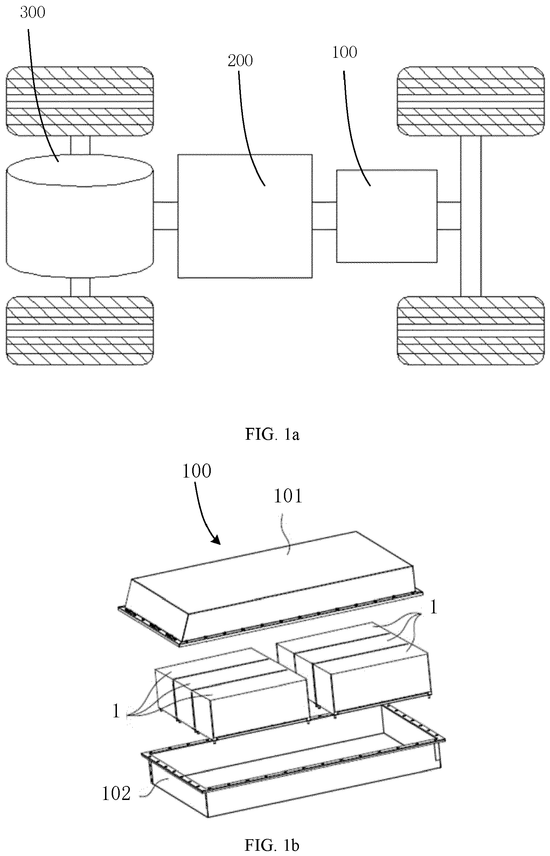

For example, as shown in FIG. 1a, which shows a structural schematic view of an electrical device according to some embodiments of the present application. The electrical device can be a vehicle, the vehicle can be a fuel powered vehicle, a gas powered vehicle, or a new energy vehicle, and the new energy vehicle can be a pure electric vehicle, a hybrid electric vehicle, or an extended range vehicle, etc. The vehicle includes a battery 100, a controller 200, and a motor 300. The battery 100 is used to supply power to the controller 200 and the motor 300, and serves as the operating and driving power supply for the vehicle. For example, the battery 100 is used for the working power needs of the vehicle during startup, navigation, and operation. For example, the battery 100 supplies power to the controller 200, and the controller 200 controls the battery 100 to supply power to the motor 300. The motor 300 receives and uses the power from the battery 100 as the driving power for the vehicle, replacing or partially replacing fuel or natural gas to provide driving power for the vehicle.

In order to achieve high functionality of the battery to meet usage needs, the battery 100 can include a plurality of battery cells 1 connected to each other. As shown in FIG. 1b, the battery 100 includes a first casing 101, a second casing 102, and a plurality of battery cells 1, the first casing 101 and the second casing 102 are engaged with each other, and the plurality of battery cells 1 are arranged in a space enclosed by the first casing 101 and the second casing 102. The plurality of battery cells 1 can be connected in series, in parallel, or in mixed method to achieve larger currents or voltages, where connected in mixed method refers to a combination of connected in series and parallel.

In order to enable those skilled in the art to have a clear understanding of the improvement points of the present application, the overall structure of each battery cell 1 is explained as follows.

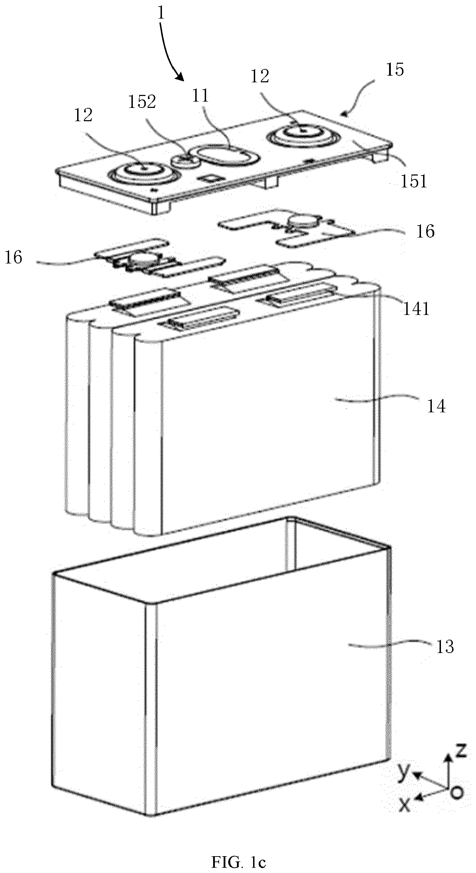

As shown in FIG. 1c, the battery cell 1 includes a casing 13, an electrode assembly 14, and an end cap assembly 15. The end cap assembly 15 includes an end cap plate 151 connected to the casing 13. The electrode assembly 14 is arranged inside the casing 13, and the casing 13 is filled with electrolyte. The battery cell 1 can be cubic, rectangular, or cylindrical in shape. The electrode assembly 14 is provided with one or more according to actual usage requirements.

The electrode assembly 14 forms a main portion by winding or stacking the first electrode sheet, the second electrode sheet, and a diaphragm located between adjacent first electrode sheet and second electrode sheet, and the diaphragm is an insulator located between adjacent first electrode sheet and second electrode sheet. In the embodiment, for example, the first electrode sheet is a positive electrode sheet, and the second electrode sheet is a negative electrode sheet. The positive active substance is coated on a coated area of the positive electrode sheet, while the negative active substance is coated on a coated area of the negative electrode sheet. A plurality of uncoated areas extending from the coated area of the main portion are stacked as electrode lugs 141. The electrode assembly 14 includes two electrode lugs 141, namely a positive lug and a negative lug. The positive lug extends from the coated area of the positive electrode sheet, while the negative lug extends from the coated area of the negative electrode sheet.

The end cap assembly 15 is located at the top of the electrode assembly 14. As shown in FIG. 1c, the end cap assembly 15 includes an end cap plate 151 and two electrode terminals 12, each of which is a positive terminal and a negative terminal. Each electrode terminal 12 is correspondingly provided with a connection member 16, and the connection member 16 is located between the end cap plate 151 and the electrode assembly 14.

For example, as shown in FIG. 1c, the electrode lugs 141 of the electrode assembly 14 are located at the top, the positive electrode lug is connected to the positive terminal by a connection member 16, and the negative electrode lug is connected to the negative terminal by another connection member 16.

The end cap plate 151 is provided with an explosion-proof member and configured for timely releasing the gas in battery cells 1 when there is too much gas in battery cells to avoid explosion. The end cap plate 151 is provided with an exhaust hole, and the exhaust hole is located in the middle of the end cap plate 151 along a length direction of the end cap plate 151. The explosion-proof member includes a pressure relief mechanism 11, and the pressure relief mechanism 11 is mounted on the exhaust hole. Under a normal condition, the pressure relief mechanism 11 is sealingly mounted on the exhaust hole. When the expansion of battery cell 1 causes the air pressure inside the casing to exceed a preset value, the pressure relief mechanism 11 is actuated to be opened, and the gas is released outward through the pressure relief mechanism 11.

The pressure relief mechanism 11 is a member or component that can be actuated to release internal pressure and/or internal substances when the internal pressure or temperature of battery cell 1 reaches a preset threshold value. The pressure relief mechanism 11 can specifically be one selected from the group such as an explosion-proof valve, a gas valve, a pressure relief valve, and a safety valve, etc. The pressure relief mechanism 11 can specifically use pressure or temperature sensitive components or structures, that is, when the internal pressure or temperature of battery cell 1 reaches a preset threshold value, the pressure relief mechanism 11 executes actions or a weak structure provided in the pressure relief mechanism 11 is damaged, thereby an opening or a channel for internal pressure releasing is formed.

The threshold value in the present application is a pressure threshold value or a temperature threshold value, and the design of the threshold value varies depending on the design requirements. For example, the threshold value is designed or determined based on the internal pressure or temperature value of the battery cell 1 that is considered to be at risk of danger or loss of control. Moreover, the threshold value is depended on, for example, one or more materials used in the positive electrode sheet, the negative electrode sheet, the electrolyte, and the isolation membrane of the battery cell 1.

The "actuated" mentioned in the present application refers to that the pressure relief mechanism 11 generates action or is actuated to a certain state, and the internal pressure of the battery cell 1 is then allowed to be released. The action generated by the pressure relief mechanism 11 can include but is not limited to: at least a portion of the pressure relief mechanism 11 is cracked, broken, torn or opened, etc. When the pressure relief mechanism 11 is actuated, the high-temperature and high-pressure substances inside the battery cell 1 are discharged from the actuated portion as emissions. In this way, the battery cell 1 is depressurized under controllable pressure or temperature, thereby avoiding potential more serious accidents.

The emissions from the battery cell 1 mentioned in the present application include but are not limited to: the electrolyte, the dissolved or split positive and negative electrode sheets, the fragments of isolation membranes, the high-temperature and high-pressure gases generated by reactions, flames, etc.

The high-temperature and high-pressure emissions are discharged towards a direction of the pressure relief mechanism 11 of the battery cell 1, and more specifically the high-temperature and high-pressure emissions are discharged in a direction of the actuated area of the pressure relief mechanism 11. The power and destructive force of such emissions are significant, and may even be sufficient to break through one or more structures such as the cap in that direction.

In some embodiments, as shown in FIG. 1c, the end cap plate 151 is provided with a through hole for injecting the electrolyte into the battery cell 1. The through hole is one selected from the group of a circular hole, an elliptical hole, a polygonal hole, or other shaped holes, and is extended along a height direction of the end cap plate 151. The end cap plate 151 is provided with a closing member 152 for sealing the through hole.

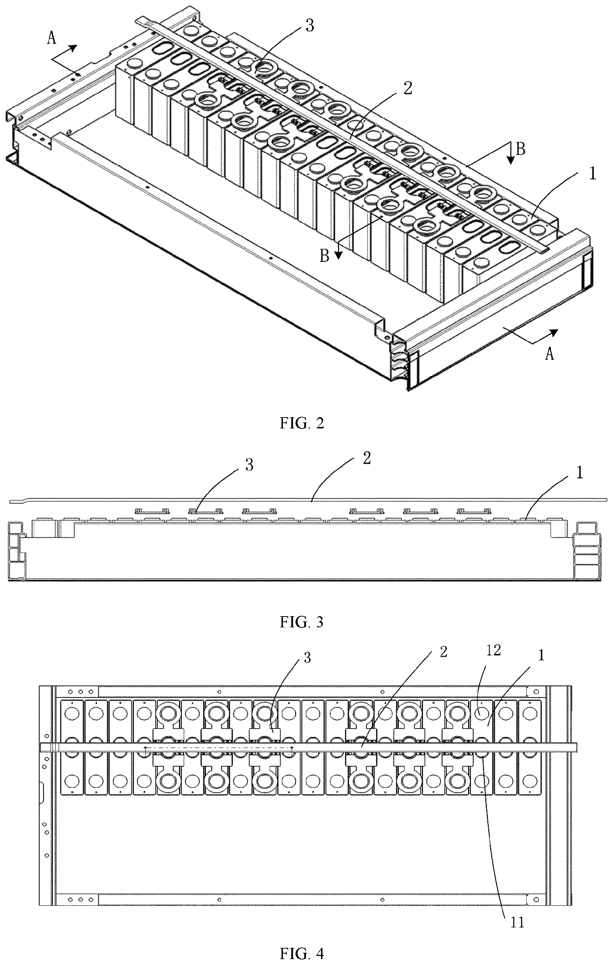

As shown in FIGs 2 to 5, Figs. 2 to 5 show structural schematic views of fixing the firefighting pipeline 2 on the battery in some embodiments of the present application.

The firefighting pipeline 2 in the embodiment of the present application is used to accommodate the fire extinguishing medium, the fire extinguishing medium is a fluid, and the fluid is a liquid or a gas.

In the case where the pressure relief mechanism 11 does not damage the firefighting pipeline 2, the firefighting pipeline 2 does not contain any substance, and in the case where the pressure relief mechanism 11 is actuated, the firefighting pipeline 2 contains the fire extinguishing medium. For example, the fire extinguishing medium is controlled to enter the firefighting pipeline 2 by opening and closing the valve.

Alternatively, even if the pressure relief mechanism 11 is not damaged, the firefighting pipeline 2 always contains the fire extinguishing medium, which can also be used to adjust the temperature of the battery cell 1. Adjusting the temperature refers to heating or cooling the battery cell 1. In the case of cooling the battery cell 1, the firefighting pipeline 2 is used to contain cooling fluid to reduce the temperature of a plurality of battery cells 1. In the embodiment, the firefighting pipeline 1 is further referred to as a cooling component, cooling system, or cooling pipeline, and the fire extinguishing medium contained therein is further referred to as a cooling medium or cooling fluid, and more specifically, the fire extinguishing medium is referred to as a coolant or cooling gas.

In an embodiment, the fire extinguishing medium is circulating to achieve better temperature adjustment. In other embodiments, the fire extinguishing medium is one selected from the group of water, a mixture of water and ethylene glycol, and gas.

As shown in FIGS. 2 to 5, the battery cell 1 is provided with a fixing member 3. The fixing member 3 is connected to the electrode terminals 12 of the battery cell 1. The firefighting pipeline 2 is fixed on the fixing member 3 to achieve the fixation of the firefighting pipeline 2 to the battery cell 1. The firefighting pipeline 2 is used to accommodate the fire extinguishing medium. In the embodiment of the present application, the firefighting pipeline 2 is fixed to the electrode terminals 12 by the fixing component 3. On the one hand, the fixing method of the firefighting pipeline 2 is simplified, such that the fixing operation of the firefighting pipeline 2 is simpler; on the other hand, the fixation effect of the firefighting pipeline is ensured and the position change of the firefighting pipeline during the process of thermal runaway of the battery leading to delayed firefighting is avoided.

As shown in FIGS. 2 to 5, in some embodiments, the battery includes: battery cells 1, a firefighting pipeline 2, and a fixing member 3. Each of the battery cells 1 includes a pressure relief mechanism 11 configured to be actuated to release an internal pressure when the internal pressure or a temperature of the battery cell 1 reaches a threshold value. The firefighting pipeline 2 is used to contain the fire extinguishing medium and configured to discharge the fire extinguishing medium when the pressure relief mechanism 11 is actuated. The fixing member 3 is mounted between the battery cell 1 and the firefighting pipeline 2, and configured to fix the firefighting pipeline 2. The fixing member 3 is provided with a flow passage area 31 and a flow guiding structure 32. The flow passage area 31 covers the pressure relief mechanism 11, and the flow passage area 31 is configured to allow the fire extinguishing medium to flow through the flow passage area 31 to the battery cell 1 when the pressure relief mechanism 11 is actuated. The flow guiding structure 32 is configured to guide the fire extinguishing medium towards the flow passage area 31 when the pressure relief mechanism 11 is actuated.

When the thermal runaway of a battery is occurred, the pressure relief mechanism 11 is actuated, and the firefighting pipeline 2 is melted through, cooling liquid and other fire extinguishing mediums contained in the firefighting pipeline are flowed out of the firefighting pipeline. Since the part where the firefighting pipeline 2 is melted through is not constant, if a part where the firefighting pipeline 2 is melted through is facing the flow passage area 31, the fire extinguishing medium directly flows to the battery cell 1 through the flow passage area 31 for effective cooling and firefighting. However, when the part where the firefighting pipeline 2 is melted through is on the side of the flow passage area 31, or the fire extinguishing medium sprayed by the firefighting pipeline 2 flows to the side of the flow passage area 31, the fire extinguishing medium can be guided towards the flow passage area 31 through a flow guiding structure 32. Therefore, the arrangement of the flow guiding structure 32 on the fixing member 3 allows more fire extinguishing mediums to flow into the portion of thermal runaway of the battery, and the flow guiding structure 32 makes the fire extinguishing medium flowing more smoothly to the portion of thermal runaway of the battery; the firefighting effect is improved, and the problem of delayed firefighting during the thermal runaway of the battery is alleviated.

In some embodiments, the flow passage area 31 includes a through hole or a weak area, and the weak area is configured to be destroyed to form a through hole when the pressure relief mechanism 11 is actuated.

As shown in FIGS. 2 to 4, in some embodiments, the plurality of battery cells 1 are sequentially arranged along the length direction of the firefighting pipeline 2, and the fixing member 3 is fixed on the battery cells 1. One fixing member 3 is correspondingly fixed on each battery cell 1, or one fixing member 3 is correspondingly fixed on some battery cells 1, and the fixing members 3 located on the same row of battery cells 1 can simultaneously fix a firefighting pipeline 2. The firefighting pipeline 2 is fixedly connected to the battery cells 1 by a plurality of fixing members 3 to prevent the position of the firefighting pipeline 2 from changing. The projection of the firefighting pipeline 2 on the fixing member 3 covers most of the area of the flow passage area 31 on the fixing member 3 and covers most of the area of the flow guiding structure 32.

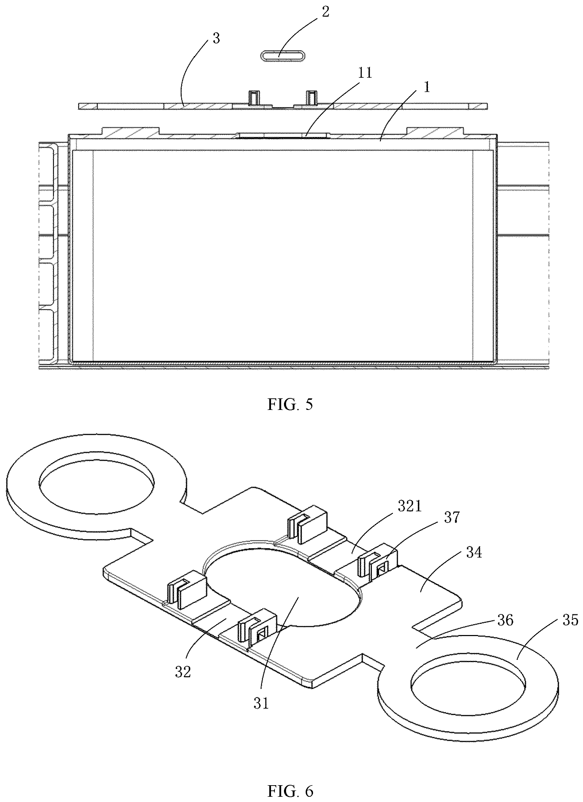

As shown in FIG. 5, in some embodiments, the fixing member 3 is fixedly arranged at the top of the battery cell 1, and the firefighting pipeline 2 is fixedly arranged at the top of the fixing member 3.

As shown in FIGS. 4 and 6, in some embodiments, the flow guiding structure 32 and the flow passage area 31 are arranged along the length direction of the firefighting pipeline 2.

When the thermal runaway of a battery is occurred, the pressure relief mechanism 11 is actuated, and the firefighting pipeline 2 is melted through, cooling liquid and other fire extinguishing mediums contained in the firefighting pipeline are flowed out of the firefighting pipeline. When the part where the firefighting pipeline 2 is melted through is on the side of the flow passage area 31, or the fire extinguishing medium sprayed by the firefighting pipeline 2 flows to the side of the flow passage area 31, then the flow guiding structure 32 and the flow passage area 31 are arranged along the length direction of the firefighting pipeline 2. The fire extinguishing medium on the side of the flow passage area 31 can be directed towards the flow passage area 31 through the flow guiding structure 32, which allows more fire extinguishing mediums to flow smoothly through the flow passage area 31 to the battery cell 1, the firefighting effect is improved, and the problem of delayed firefighting during the thermal runaway of the battery is alleviated.

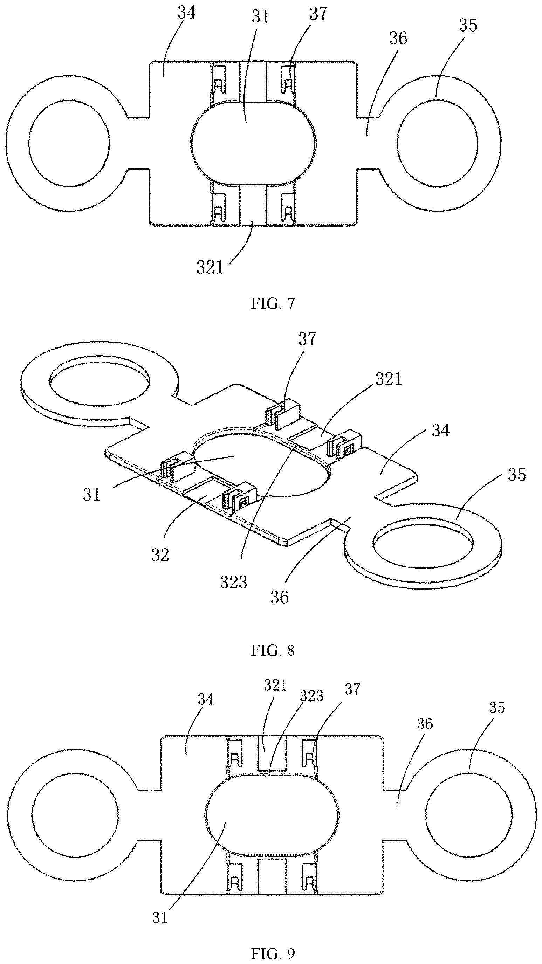

As shown in FIGS. 6 and 7, in some embodiments, the flow guiding structure 32 includes a recess 321, and the recess 321 is concavely formed along a direction of the fixing member 3 towards the battery cell 1, and the recess 321 is connected between the flow passage area 31 and a lateral edge of the fixing member 3.

The recess 321 is formed by thinning the material on the fixing member 3, and the fire extinguishing medium flows to the flow passage area 31 by the guiding effect of the recess 321. The recess 321 can reduce the obstacles caused by the fixing member 3 to the flow of the fire extinguishing medium, which reduces the flow resistance of the fire extinguishing medium, and more fire extinguishing mediums are allowed to flow smoothly through the flow passage area to the battery cell; the firefighting effect is improved.

In some embodiments, the flow passage area 31 and the lateral edge of the fixing member are arranged along the length direction of the firefighting pipeline 2.

The recess 321 is connected between the flow passage area 31 and the lateral edge of the fixing member 3, and the flow passage area 31 and the lateral edge of the fixing member 3 are arranged along the length direction of the firefighting pipeline 2, that is, the recess 321 extends along the length direction of the firefighting pipeline 2. No matter the portion of firefighting pipeline 2 facing the flow passage area 31, or the portion of firefighting pipeline 2 located at a side of the flow passage area 31, is melted through, the fire extinguishing medium released from the firefighting pipeline 2 can either directly flow into the flow passage area 31 or flow into the recess 321; by the guiding effect of the recess 321, more fire extinguishing mediums are allowed to flow through the flow passage area 31, and the firefighting effect is improved.

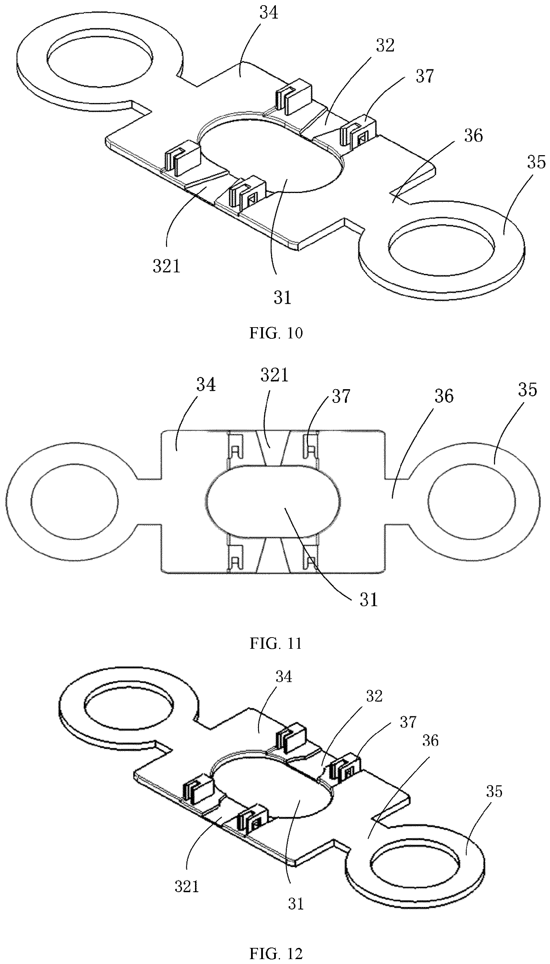

As shown in FIGS. 6 to 9, in some embodiments, a width of the recess 321 is uniformly consistent along a direction from the flow passage area 31 to the lateral edge of the fixing member 3. As shown in FIGS. 10 to 13, a width of the recess 321 varies along a direction of the flow passage area 31 to the lateral edge of the fixing member 3.

In some embodiments, the recess 321 is constructed as one of the groups selected from a linear flow channel, a curved flow channel, or a combination flow channel connected by a straight line and a curve.

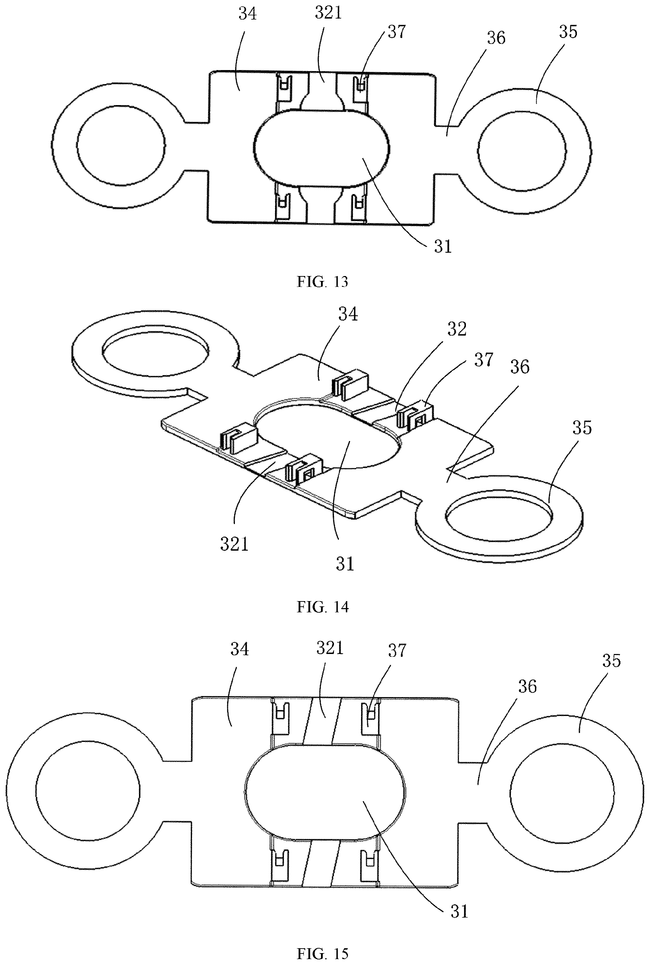

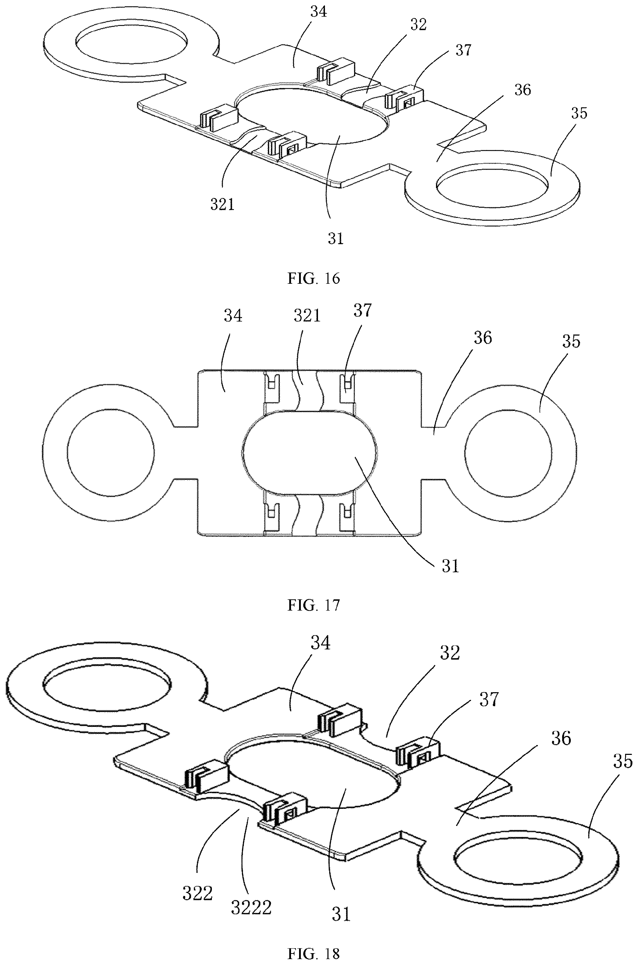

As shown in FIGS. 6 to 9, the linear flow channel includes a rectangular flow channel. As shown in FIGS. 10 and 11, the linear flow channel includes a trapezoidal flow channel, and a short side of the trapezoidal flow channel connected to the flow passage area 31. As shown in FIGS. 12 and 13, the combination flow channel connected by a straight line and a curve includes a combination flow channel connected by a rectangular flow channel and a semicircular flow channel, and the semicircular flow channel is connected to the flow passage area 31, and the rectangular flow channel is connected to a curved edge of the semicircular flow channel. As shown in FIGS. 14 and 15, the linear flow channel includes a parallelogram flow channel, also known as an inclined flow channel. As shown in FIGS. 16 and 17, the curved flow channel includes an S-shaped curved flow channel.

As shown in FIGS. 8 and 9, in some embodiments, the flow guiding structure 32 further includes a reinforcing rib 323, a part where the recess 321 is connected to the flow passage area 31 is a first part, and a part where the recess 321 is connected to the lateral edge of the fixing member 3 is a second part. The reinforcing rib 323 is arranged at the first part, or arranged at the second part, or arranged between the first part and the second part. The strength of the fixing member 3 is improved by providing the reinforcing rib 323.

As shown in FIGS. 8 and 9, in some embodiments, the reinforcing rib 323 is located at an end of the recess 321 close to the flow passage area 31. That is, the reinforcing rib 323 is located in the first part.

The strength of the fixing member 3 is improved by providing the reinforcing rib 323. The fire extinguishing medium flows towards the flow passage area 31 under the guidance of the recess 321, and the fire extinguishing medium crossing the reinforcing rib 323 due to flow inertia of the fire extinguishing medium flows towards the flow passage area 31. The reinforcing rib 323 will not cause excessive interference with the flow of the fire extinguishing medium.

As shown in FIGS. 18 to 21, in some embodiments, the flow guiding structure 32 includes a notch 322, and the notch 322 and the flow passage area 31 are arranged along the length direction of the firefighting pipeline 2; the notch 322 is formed by removing material from the lateral edge of the fixing member 3 towards the flow passage area 31, and the lateral edge of the fixing member 3 and the flow passage area 31 are located in the length direction of the firefighting pipeline 2.

The notch 322 is formed by removing material from the fixing member 3, which can reduce the flow resistance of the fixing member 3 to the fire extinguishing medium, and more fire extinguishing mediums are allowed to flow smoothly to the flow passage area 31.

The notch 322 is formed by removing materials, and the fire extinguishing medium first flows through the notch 322 and then relies on flow inertia to cross through a non-removed area, or vice versa.

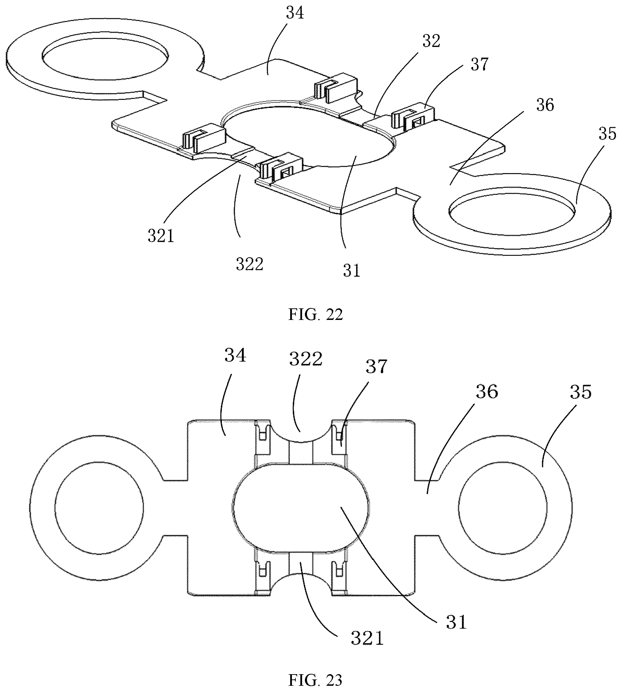

As shown in FIGS. 22 to 25, in some embodiments, the flow guiding structure 32 includes a recess 321 and a notch 322. The recess 321 is concavely formed along a direction of the fixing member 3 towards the battery cell 1, and the recess 321 is connected between the flow passage area 31 and the lateral edge of the fixing member 3. The notch 322 is arranged at the recess 321, and the notch 322 is constructed by removing material from the lateral edge of the fixing member 3 towards the flow passage area 31, and the lateral edge of the fixing member 3 and the flow passage area 31 are located in the length direction of the firefighting pipeline 2.

The flow guiding structure 32 includes a recess 321 formed by thinning the material and a notch 322 formed by removing the material at the recess 321. The combination of the recess 321 and the notch 322 can reduce the resistance generated by the fixing member 3 during the flow of the fire extinguishing medium, and more fire extinguishing mediums are allowed to flow smoothly into the thermal runaway area.

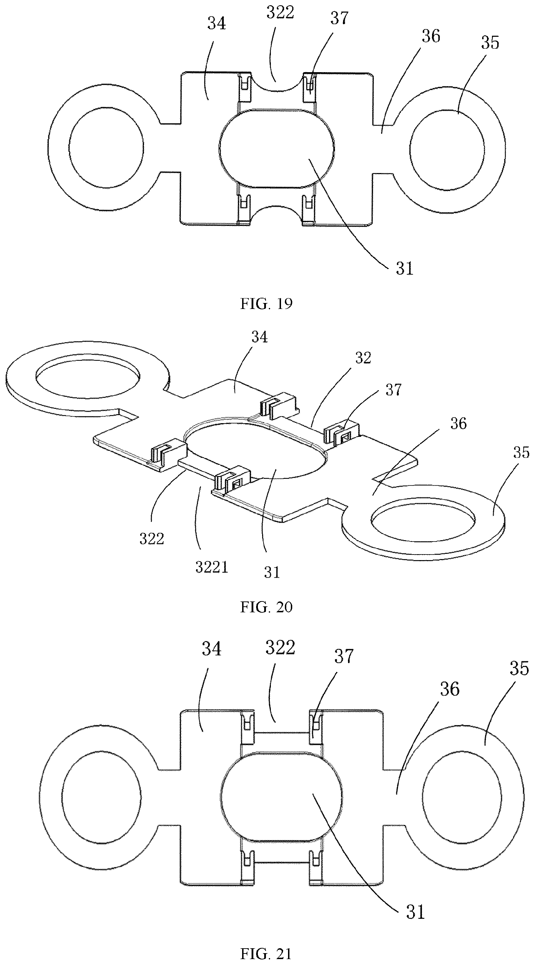

As shown in FIGS. 20 and 21, in some embodiments, the notch 322 is constructed as a rectangular notch 3221. As shown in FIGS. 22 and 23, the notch 322 is constructed as an arc-shaped notch 3222.

The shape of notch 322 is not limited to a rectangular notch 3221 and an arc-shaped notch 3222. The resistance generated by fixing member 3 during the flow process of fire extinguishing medium can be reduced by providing the notch 322, and more fire extinguishing mediums are allowed to flow smoothly into the thermal runaway area.

In the embodiments of the present application, the shape and position of notch 322 are not limited by the above limitations.

In some embodiments, both sides of the flow passage area 31 are respectively provided with the flow guiding structure 32 along a length direction of the firefighting pipeline 2.

The recess 321 extends along the length direction of the firefighting pipeline 2. Regardless of which portion of the firefighting pipeline 2 is melted through, the fire extinguishing medium released from the firefighting pipeline 2 either directly flows into the flow passage area 31 or flows to the flow guiding structure 32. By the guiding effect of the flow guiding structure 32, more fire extinguishing mediums flows towards the flow passage area 31, and the firefighting effect is improved.

As shown in FIGS. 6 to 25, in some embodiments, the fixing member 3 includes a limiting portion 37, which is configured to limit the radial movement of the firefighting pipeline 2.

As shown in FIGS. 4 and 6 to 25, in some embodiments, the battery cell 1 includes electrode terminals 12; the fixing member 3 includes a main portion 34, connection portions 35, and connection strips 36. A shape of the main portion 34 is matched with the top surface shape of the battery cell 1, the flow passage area 31 and the flow guiding structure 32 are both located on the main portion 34, shapes of the connection portion 35 are matched with shapes of the electrode terminals 12, the connection portions 35 are connected to the electrode terminals 12, and the connection strips 36 are connected between the main portion 34 and the connection portion 35. The maximum size of the connecting strip 36 in the length direction of the firefighting pipeline 2 is smaller than the maximum size of the main portion 34 and the connection portion 35 in the length direction of the firefighting pipeline 2, respectively.

In conjunction with FIGS. 2 to 25, some specific embodiments of the battery and fixing member 3 are described below.

As shown in FIGS. 2 and 3, the casing 102 is provided with two rows of battery cells 1, each row of battery cells 1 including a plurality of battery cells 1. The plurality of battery cells 1 located in the middle area are respectively provided with fixing members 3, and the connection portions 35 of the fixing members 3 are connected to the electrode terminals 12 of the battery cells 1. The fixing members 3 on battery cells 1 located in the same row are fixed to the same firefighting pipeline 2.

As shown in FIGS. 4 and 5, the length direction of firefighting pipeline 2 is consistent with the layout direction of a single row of battery cells 1. The projection of firefighting pipeline 2 on the battery cells 1 covers most of the area of pressure relief mechanism 11, and the projection of firefighting pipeline 2 on the fixing members 3 covers most of the area of flow passage area 31 and flow guiding structure 32.

As shown in FIGS. 6 and 7, in a first embodiment of the fixing member 3, the fixing member 3 includes a flow passage area 31, recesses 321, a main portion 34, connection portions 35, connection strips 36, and limiting portions 37.

The shape of the main portion 34 is matched with the top surface shape of the battery cells 1, and the flow passage area 31 and the recesses 321 are both located on the main portion 34. The recesses 321 are provided on both sides of the flow passage area 31 along the length direction of the firefighting pipeline 2. The recesses 321 are formed by thinning the material of the fixing member 3. The recesses 321 are rectangular flow channels.

The position where each recess 321 is located is respectively provided with two limiting portions 37. The two limiting portions 37 are arranged along a radial direction of the firefighting pipeline 2 to limit the firefighting pipeline 2 to prevent the firefighting pipeline 2 from radially moving.

The shapes of the connection portions 35 are matched with that of the electrode terminals 12, and the connection portions 35 are used to connect the electrode terminals 12. The connection strips 36 are used to connect the main portion 34 with the connection portions 35, and the maximum size of the connection strip 36 in the length direction of the firefighting pipeline 2 is smaller than the maximum size of the main portion 34 and the connection portion 35 in the length direction of the firefighting pipeline 2, respectively.

When the battery occurs thermal runaway, the firefighting pipeline 2 is melted through, and coolant and other fire extinguishing mediums flow out. The fire extinguishing medium flows through the thinned recess 321 to the flow passage area 31, which facilitates the flow of fire extinguishing medium into the thermal runaway area.

As shown in FIGS. 8 and 9, in a second embodiment of the fixing member 3, the difference between the second embodiment of the fixing member 3 and the first embodiment of the fixing member 3 is that a side of the recess 321 connected to the flow passage area 31 is provided with a reinforcing rib 323. The strength of the fixing member 3 is strengthened by providing the reinforcing rib 323. The fire extinguishing medium first passes through the thinned recess 321, and then flows into the thermal runaway area by relying on flow inertia to cross the reinforcing rib 323.

As shown in FIGS. 10 and 11, in a third embodiment of the fixing member 3, the difference between the third embodiment of the fixing member 3 and the first embodiment of the fixing member 3 is that the recess 321 is a trapezoidal flow channel, and a short side of the trapezoidal flow channel is connected to the flow passage area 31, which can improve the speed of the fire extinguishing medium flowing to the flow passage area 31. In an embodiment, when the speed of fire extinguishing medium injection into the flow passage area 31 is necessary to be reduced, a long side of the trapezoidal flow channel is connected to the flow passage area 31.

As shown in FIGS. 12 and 13, in a fourth embodiment of fixing member 3, the difference between the fourth embodiment of fixing member 3 and the first embodiment of fixing member 3 is that the recess 321 is a combination flow channel connected by a rectangular flow channel and a semicircular flow channel. The semicircular flow channel is connected to the flow passage area 31, and the rectangular flow channel is connected to the arc-shaped edge of the semicircular flow channel.

As shown in FIGS. 14 and 15, in a fifth embodiment of the fixing member 3, the difference between the fifth embodiment of the fixing member 3 and the first embodiment of the fixing member 3 is that the recess 321 is a parallelogram flow channel, and an angle at which the fire extinguishing medium flows into the flow passage area 31 can be adjusted by providing the parallelogram flow channel.

As shown in FIGS. 16 and 17, in a sixth embodiment of the fixing member 3, the difference between the sixth embodiment of the fixing member 3 and the first embodiment of the fixing member 3 is that the recess 321 is an S-shaped flow channel, and an angle at which the fire extinguishing medium flows into the flow passage area 31 can be adjusted by providing the S-shaped flow channel.

As shown in FIGS. 18 and 19, in a seventh embodiment of the fixing member 3, the difference between the seventh embodiment of the fixing member 3 and the first embodiment of the fixing member 3 is that the flow guiding structure 32 is no longer a recess 321, and the flow guiding structure 32 is notches 322 formed by removing material on the sides of the flow passage area 31, and the notches 322 are arc shaped notches 3222.

As shown in FIGS. 20 and 21, in an eighth embodiment of fixing member 3, the difference between the eighth embodiment of fixing member 3 and the first embodiment of fixing member 3 is that the flow guiding structure 32 is no longer a recess 321, and the flow guiding structure 32 is notches 322 formed by removing material on the sides of the flow passage area 31, and the notches 322 are rectangular notches 3221.

As shown in FIGS. 22 and 23, in a ninth embodiment of the fixing member 3, the difference between the ninth embodiment of the fixing member 3 and the first embodiment of the fixing member 3 is that an arc-shaped notch 3222 is arranged on the recess 321, and the arc-shaped notch 3222 is formed by removing material from the lateral edge of the fixing member 3. In the ninth embodiment of the fixing member 3, the flow guiding structure 32 includes a recess 321 formed by thinning the material of the fixing member 3, and an arc-shaped notch 3222 formed by removing the material of the fixing member 3. The recess 321 and the notch 322 are combined to guide the fire extinguishing medium, and the firefighting effect is further improved.

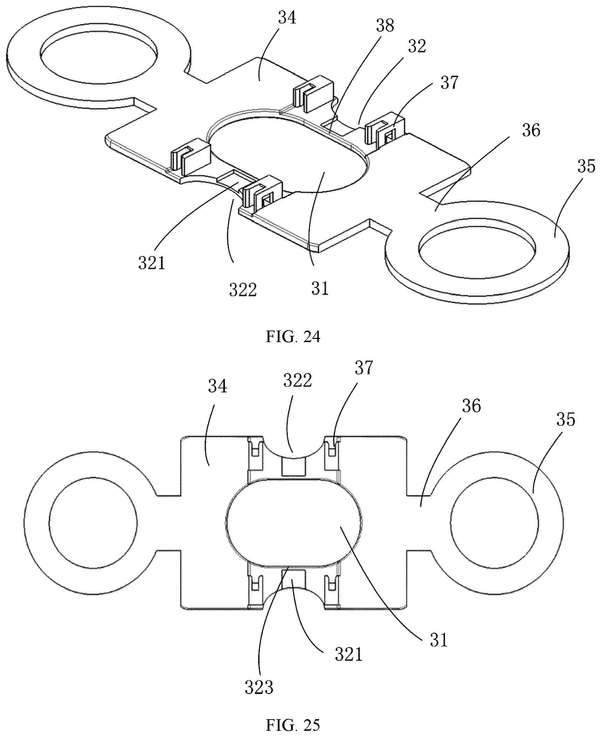

As shown in FIGS. 24 and 25, in a tenth embodiment of the fixing member 3, the difference between the tenth embodiment of the fixing member 3 and the ninth embodiment of the fixing member 3 is that a reinforcing rib 323 is arranged at the position where the recess 321 is connected to the flow passage area 31, and the strength of the fixing member 3 is improved by providing the reinforcing rib 323.

In some embodiments, an electrical device is further provided, and the electrical device includes a battery configured to provide electrical energy.

Due to the fact that the electrical device includes the battery provided in the embodiments of the present application, the corresponding beneficial effects of the battery are not further repeated here.

In some embodiments, the electrical device includes a vehicle.

In some embodiments, the present application further provides a method for manufacturing a battery, and the method includes: mounting a battery cell 1, and the battery cell 1 includes a pressure relief mechanism 11 configured to be actuated to release an internal pressure when the internal pressure or a temperature of the battery cell 1 reaches a threshold value; mounting a fixing member 3; and mounting a firefighting pipeline 2 fixed by the fixing member 3, the firefighting pipeline 2 is configured for accommodating a fire extinguishing medium and configured to discharge the fire extinguishing medium when the pressure relief mechanism 11 is actuated; the fixing member 3 is provided with a flow passage area 31 and a flow guiding structure 32, the flow passage area 31 covers the pressure relief mechanism 11, and the flow passage area 31 is configured to cause the fire extinguishing medium to flow through the flow passage area 31 to the battery cell 1 when the pressure relief mechanism 11 is actuated; and the flow guiding structure 32 is configured to guide the fire extinguishing medium towards the flow passage area 31 when the pressure relief mechanism 11 is actuated.

When the thermal runaway of a battery is occurred, the pressure relief mechanism 11 is actuated, and the firefighting pipeline 2 is melted through, cooling liquid and other fire extinguishing mediums contained in the firefighting pipeline are flowed out of the firefighting pipeline. A part where the firefighting pipeline 2 is melted through is facing the flow passage area 31, the fire extinguishing medium directly flows to the battery cell 1 through the flow passage area 31 for effective cooling and firefighting. However, when the part where the firefighting pipeline 2 is melted through is on the side of the flow passage area 31, or the fire extinguishing medium sprayed by the firefighting pipeline 2 flows to the side of the flow passage area 31, the fire extinguishing medium can be guided towards the flow passage area 31 through a flow guiding structure 32. Therefore, the arrangement of the flow guiding structure 32 on the fixing member 3 allows more fire extinguishing mediums to flow into the portion of thermal runaway of the battery, and the flow guiding structure 32 makes the fire extinguishing medium flowing more smoothly to the portion of thermal runaway of the battery; the firefighting effect is improved, and the problem of delayed firefighting during the thermal runaway of the battery is alleviated.

In some embodiments, the present application further provides an apparatus for manufacturing a battery, and the apparatus includes: a battery cell mounting device configured for mounting a battery cell 1, and the battery cell 1 includes a pressure relief mechanism 11 configured to be actuated to release an internal pressure when the internal pressure or a temperature of the battery cell 1 reaches a threshold value; a fixing member mounting device configured for mounting a fixing member 3; and a firefighting pipeline mounting device configured for mounting a firefighting pipeline 2 fixed by the fixing member 3, the firefighting pipeline 2 is configured for accommodating a fire extinguishing medium and configured to discharge the fire extinguishing medium when the pressure relief mechanism 11is actuated; the fixing member 3 is provided with a flow passage area 31 and a flow guiding structure 32, the flow passage area 31 covers the pressure relief mechanism 11, and the flow passage area 31 is configured to cause the fire extinguishing medium to flow through the flow passage area 31 to the battery cell 1 when the pressure relief mechanism 11 is actuated; and the flow guiding structure 32 is configured to guide the fire extinguishing medium towards the flow passage area 31 when the pressure relief mechanism 11 is actuated.

When the thermal runaway of a battery is occurred, the pressure relief mechanism 11 is actuated, and the firefighting pipeline 2 is melted through, cooling liquid and other fire extinguishing mediums contained in the firefighting pipeline are flowed out of the firefighting pipeline. A part where the firefighting pipeline 2 is melted through is facing the flow passage area 31, and the fire extinguishing medium directly flows to the battery cell 1 through the flow passage area 31 for effective cooling and firefighting. However, when the part where the firefighting pipeline 2 is melted through is on the side of the flow passage area 31, or the fire extinguishing medium sprayed by the firefighting pipeline 2 flows to the side of the flow passage area 31, the fire extinguishing medium can be guided towards the flow passage area 31 through a flow guiding structure 32. Therefore, the arrangement of the flow guiding structure 32 on the fixing member 3 allows more fire extinguishing mediums to flow into the portion of thermal runaway of the battery, and the flow guiding structure 32 makes the fire extinguishing medium flowing more smoothly to the portion of thermal runaway of the battery; the firefighting effect is improved, and the problem of delayed firefighting during the thermal runaway of the battery is alleviated.

Although the present application has been described with reference to the embodiments, various improvements can be made and components can be replaced with equivalents without departing from the protection scope of the present application. The various technical features mentioned in each embodiment can be combined in any way in case that there is no structural conflict. The present application is not limited to the specific embodiments applied in the specification, but includes all technical solutions falling within the scope of the claims.

## Claims

1. A battery, comprising:
a battery cell (1), comprising a pressure relief mechanism (11) configured to be actuated to release an internal pressure when the internal pressure or a temperature of the battery cell (1) reaches a threshold value;
a firefighting pipeline (2), configured for accommodating a fire extinguishing medium, wherein the firefighting pipeline (2) is configured to discharge the fire extinguishing medium when the pressure relief mechanism (11) is actuated; and
a fixing member (3), arranged between the battery cell (1) and the firefighting pipeline (2), and the fixing member (3) being configured to fix the firefighting pipeline (2); wherein the fixing member (3) is provided with a flow passage area (31) and a flow guiding structure (32), the flow passage area (31) covers the pressure relief mechanism (11), and the flow passage area (31) is configured to cause the fire extinguishing medium to flow through the flow passage area (31) to the battery cell (1) when the pressure relief mechanism (11) is actuated; and the flow guiding structure (32) is configured to guide the fire extinguishing medium towards the flow passage area (31) when the pressure relief mechanism (11) is actuated.

2. The battery according to claim 1, wherein the flow guiding structure (32) and the flow passage area (31) are arranged along a length direction of the firefighting pipeline (2).

3. The battery according to claim 1 or 2, wherein the flow guiding structure (32) comprises a recess (321) concavely formed along a direction of the fixing member (3) towards the battery cell (1), and the recess (321) is connected between the flow passage area (31) and a lateral edge of the fixing member (3).

4. The battery according to claim 3, wherein the flow passage area (31) and the lateral edge of the fixing member (3) are arranged along a length direction of the firefighting pipeline (2).

5. The battery according to claim 3 or 4, wherein the flow guiding structure (32) comprises a reinforcing rib (323), and the reinforcing rib (323) is located at one end of the recess (321) close to the flow passage area (31).

6. The battery according to any one of claims 1 to 5, wherein the flow guiding structure (32) comprises a notch (322), the notch (322) and the flow passage area (31) are arranged along a length direction of the firefighting pipeline (2); the notch (322) is formed by removing material from a lateral edge of the fixing member (3) towards the flow passage area (31), and the lateral edge of the fixing member (3) and the flow passage area (31) are located in the length direction of the firefighting pipeline (2).

7. The battery according to claim 6, wherein the notch (322) is constructed as a rectangular notch (3221) or an arc-shaped notch (3222).

8. The battery according to any one of claims 1 to 7, wherein both sides of the flow passage area (31) are respectively provided with the flow guiding structure (32) along a length direction of the firefighting pipeline (2).

9. An electrical device, comprising the battery as claimed in any one of claims 1 to 8, wherein the battery is configured to provide electrical energy.

10. A method for manufacturing a battery, comprising:
mounting a battery cell (1), wherein the battery cell (1) comprises a pressure relief mechanism (11) configured to be actuated to release an internal pressure when the internal pressure or a temperature of the battery cell (1) reaches a threshold value;
mounting a fixing member (3); and
mounting a firefighting pipeline (2) and fixing the firefighting pipeline (2) by the fixing member (3), wherein the firefighting pipeline (2) is configured for accommodating a fire extinguishing medium and configured to discharge the fire extinguishing medium when the pressure relief mechanism (11) is actuated;
wherein the fixing member (3) is provided with a flow passage area (31) and a flow guiding structure (32), the flow passage area (31) covers the pressure relief mechanism (11), and the flow passage area (31) is configured to cause the fire extinguishing medium to flow through the flow passage area (31) to the battery cell (1) when the pressure relief mechanism (11) is actuated; and the flow guiding structure (32) is configured to guide the fire extinguishing medium towards the flow passage area (31) when the pressure relief mechanism (11) is actuated.

11. An apparatus for manufacturing a battery, comprising:
a battery cell mounting device, configured for mounting a battery cell (1), wherein the battery cell (1) comprises a pressure relief mechanism (11) configured to be actuated to release an internal pressure when the internal pressure or a temperature of the battery cell (1) reaches a threshold value;
a fixing member mounting device, configured for mounting a fixing member (3); and
a firefighting pipeline mounting device, configured for mounting a firefighting pipeline (2) and fixing the firefighting pipeline (2) by the fixing member (3), wherein the firefighting pipeline (2) configured for accommodating a fire extinguishing medium and configured to discharge the fire extinguishing medium when the pressure relief mechanism (11) is actuated;
wherein the fixing member (3) is provided with a flow passage area (31) and a flow guiding structure (32), the flow passage area (31) covers the pressure relief mechanism (11), and the flow passage area (31) is configured to cause the fire extinguishing medium to flow through the flow passage area (31) to the battery cell (1) when the pressure relief mechanism (11) is actuated; and the flow guiding structure (32) is configured to guide the fire extinguishing medium towards the flow passage area (31) when the pressure relief mechanism (11) is actuated.
